(19) **Europäisches Patentamt**

**European Patent Office**

**Office européen des brevets**

(11) **EP 1 596 160 A1**

(12) **EUROPEAN PATENT APPLICATION**

(43) Date of publication:
**16.11.2005 Bulletin 2005/46**

(51) Int Cl.$^7$: **G01B 21/04**

(21) Application number: **04102003.3**

(22) Date of filing: **10.05.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventor: **Pettersson,Bo**<br>**644 36 Torshalla (SE)** |
| | (74) Representative: **Jorio, Paolo et al**<br>**Studio Torta S.r.l.**<br>**Via Viotti, 9**<br>**10121 Torino (IT)** |
| (71) Applicant: **Hexagon Metrology AB**<br>**131 26 Nacka Strand (SE)** | |

(54) **Method of inspecting workpieces on a measuring machine**

(57) A method of inspecting a series of workpieces (13) including a calibration step in which calibration data $(C_0, ..., C_i, ... C_n)$ are obtained by measuring a reference workpiece in a high accuracy measuring device in laboratory conditions, a mastering step in which mastering data $(M_0, ..., M_i, ... M_m)$ are obtained by measuring the reference workpiece on a measuring machine (1) in production conditions, a workpiece inspection step whereby workpiece inspection data $(I_0, ..., I_i, ... I_k)$ are obtained by measuring another workpiece from said series of workpieces on the measuring machine (1) in the production conditions, and a compensation step in which measurement results obtained in the workpiece inspection step are corrected by using the calibration data and the mastering data.

**EP 1 596 160 A1**

```
        ┌──────────────────┐              ┌──────────────────┐
        │   CALIBRATION    │              │    INSPECTION    │──24
   20── │ (sample workpiece,│              │(production workpiece,│
        │   laboratory)    │              │  production CMM) │
        └────────┬─────────┘              └────────┬─────────┘
                 │                                  │
        ┌────────▼─────────┐              ┌────────▼─────────┐
   21── │   COMPUTE L(C)   │              │   COMPUTE L(I)   │──25
        └────────┬─────────┘              └────────┬─────────┘
                 │                                  │
        ┌────────▼─────────┐              ┌────────▼─────────┐
        │    MASTERING     │              │      POINT       │──26
   22── │ (sample workpiece,│              │   ALIGNMENT      │
        │  production CMM) │              └────────┬─────────┘
        └────────┬─────────┘                       │
                 │                        ┌────────▼─────────┐
        ┌────────▼─────────┐              │   COMPENSATION   │──27
   23── │   COMPUTE L(M)   │              └──────────────────┘
        └──────────────────┘
```

**Fig. 2**

## Description

The present invention relates to a method of inspecting workpieces on a measuring machine, in particular by continuous scanning.

In industrial series production, it is customary practice to inspect workpieces, after production, in order to ascertain that the dimensional parameters of the workpieces comply with the specifications and that, therefore, the manufacturing cycle is properly set.

Workpiece inspection may be carried out by means of measuring machines, particularly co-ordinate measuring machines ("CMMs"). CMMs include a drive unit and a probe supported by the drive unit and adapted to be moved by the drive unit in a measure volume in accordance with predetermined measurement cycles in order to sense the workpiece either by contact (so-called "touch probes") or by contactless, e.g. optical, scanning techniques.

In the former case, as it is well known in the art, the measurement cycle can either be based on the "reading" of discrete points, obtained by "freezing" the coordinates of the CMM when the probe, driven along predetermined paths, comes into contact with the workpiece, or on continuous scanning. In continuous scanning, a workpiece surface is scanned along a predetermined path, or nominal path, and readings are taken at high frequency along the path. "Continuous" scanning consists, in facts, in an appropriately dense reading of discrete points, after which, through well known interpolation computer programs, a continuous curve can be calculated.

The inspection accuracy is affected by a number of negative factors including dynamic-type errors due to elastic deformations affecting the CMM drive unit because of accelerations and consequent inertia forces.

Quite obviously, a high inspection speed is required in order to reduce the time consumed by the measure cycle, but high inspection speeds tend to increase the above error factors; in conclusion, accuracy and inspection speed are functional targets that tend to be antithetical to one another.

In view of the foregoing problems, several methods have been devised in order to compensate measure errors occurring because of high inspection speed. These methods are based on the assumption that the behaviour of the measuring machine is repeatable, i.e. that errors incurred while inspecting the workpiece at predetermined conditions (direction, velocity and position in the measuring volume) will be the same each time; based on this assumption, if the error can be determined once, a correction can be applied to all successive measurements performed at the same conditions, e.g. when measuring different workpieces in series production by using the same measure cycle or "part program".

EP-A-0 318 557 discloses a method of compensating errors due to high scanning speed in which correction values are computed as the difference between two preliminary readings taken at different speeds (slow and fast) on the same reference workpiece at corresponding points; then the corrections values are used to compensate the subsequent production readings taken at the same corresponding points on production workpieces, at the fast speed. As dynamic-type errors depend on the instantaneous direction and speed of the probe movement, as well as on the instantaneous position in the working volume of the measuring machine, this method requires that both preliminary readings and production readings are taken with the workpieces located in the same position within the working volume of the same CMM.

This methods has some disadvantages. First of all, only "dynamics-induced" errors are compensated. Other error sources are neglected, or need independent compensation. Examples of such errors are residual geometrical error in the CMM, e.g. the imperfect orthogonality between the machine axes. Another example are errors caused by non-linear thermal expansion in complex workpieces, such as workpieces having parts made of different materials.

Furthermore, this method is adapted to discrete-point measuring cycles, but not to continuous scanning, where the notion of "corresponding points" becomes undefined and therefore the comparison between two corresponding points may be impossible or lead to wrong error determinations.

Finally, a time time-consuming, preliminary slow reading is required on the same CMM as used in production; this means that this method brings about a considerable downtime of the CMM.

US-A-4 611 156 discloses a method of compensating errors resulting from scanning speed and depending on impact deformations. This method provides a correction based on pre-stored correction values as a function of the relative velocity of approach between a touch probe and a workpiece, and depending on the material pairing, i.e. the particular pair of materials constituting the workpiece and the probe.

Again, no error source other than impact deformation is taken into account.

An object of the present invention is to device a workpiece inspection method that is free from the above-mentioned drawbacks and limitations.

This object is achieved by a workpiece inspection method as claimed in claim 1.

For a better comprehension of the present invention, a non limiting embodiment thereof is described below with reference to the attached drawings, in which:

Figure 1 is a scheme showing an example of a measuring system for performing the method of the present invention; and
Figure 2 is a flow chart of the method.

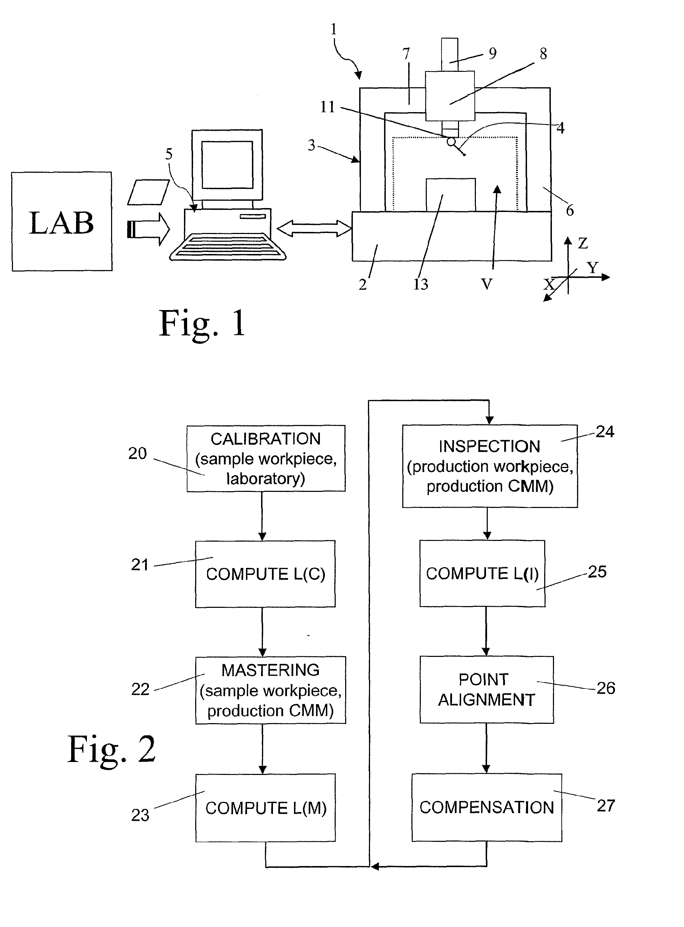

With reference to Figure 1, a coordinate measuring machine (CMM) 1 includes a base 2 and a drive unit 3 supporting a touch probe 4. Drive unit 3 is operable to move probe 4 in a measure volume V under the control of a computer 5 interfaced to the machine drives. A coordinate axes system X, Y, Z is associated to CMM 1, with horizontal axes X, Y perpendicular to one another and parallel to respective main directions of base 2 and vertical axis Z.

Drive mechanism 3 can include, by way of non limiting example, a gantry 6 movable along base 2 parallel to axis X and having a top beam 7 parallel to axis Y, a slide 8 movable along a top beam 7 parallel to axis Y, and a head 9 carried by slide 8 and movable vertically along axis Z.

Touch probe 4 is connected to a lower end of head 9, preferably by means of a 2-axis wrist 11, i.e. a motorised articulated connection allowing the probe attitude to be set with two further (rotational) degrees of freedom.

Drive mechanism 3 and its basic functions are not described to any further extent, being well known in the art.

CMM 1 is advantageously associated to a production line and used to inspect each of a series of workpieces 13 manufactured in the line by continuous scanning; it is therefore referred to, hereinafter, as the "production CMM". Due to its use, production CMM 1 can be of relatively low accuracy, but must be capable of performing high-speed continuous scanning in order to comply with production speed requirements.

Workpiece 13 is conveniently positioned in the measure volume V by an automatic positioning system (not shown) that is adapted to place each of a series of workpieces from the output of a production line in a predetermined position and orientation, as will be further explained hereinafter.

Before entering deeply the details of the method in accordance with the present invention, some preliminary remarks and definitions are needed.

The geometrical feature to be inspected on the workpiece by continuous scanning is a curve on the surface of the workpiece, along which probe 4 is moved for scanning according to a predetermined scanning program. The ideal geometry of this curve is defined as "nominal path", and can be considered as the curve representing the nominal contour of the workpiece, i.e. the contour of an ideal, geometrically perfect workpiece, along a given scanning line.

From a mathematical standpoint, the nominal path can be thought of either as a sequence of discrete, although appropriately dense 3D-points (i.e., more precisely, a sequence of x,y,z vectors) or a continuous curve obtained by interpolating the points via any interpolation algorithm. A variable, linear co-ordinate L can be associated with the nominal path, and identifies a position in the nominal path. Assuming that the nominal path is described by n+1 points enumerated from P (0) to P(n), then the linear co-ordinate L varies continuously from 0 to n. An integer value of L (L=i) identifies the position of the $i^{th}$ point P(i). A real non integer number L (i<L<i+1) represents a position between two consecutive points P(i) and P (i+1). In case the point density of the path is constant (constant distance between adjacent points), then the linear co-ordinate L associated with a particular position P in the path is proportional to the length of the traveled path from the beginning to this position. In case the point density of the path is not constant the linear co-ordinate is not proportional to any distance, but the following algorithm will work in the same way.

Given the nominal path and given a point P (Px,Py,Pz) not necessarily belonging to the nominal path, it is possible to define a value of the linear co-ordinate L associated with P in the following way: L is the linear co-ordinate associated with Pp, where Pp is the point belonging to the continuous interpolated path whose distance from P is minimum.

When a CMM measures the workpiece in continuous scanning mode, a set of points is taken. Given a set of measured points and given the nominal path, a value of L can be associated with each measured point as described above.

With reference to the flow chart of figure 2, the method of the present invention includes a preliminary, calibration step 20 that is performed beforehand, i.e. before inspecting a series of workpieces on "production" CMM 1 and is aimed to detect the geometrical features to be measured on a reference workpiece as closely as possible.

As it is well known to a skilled person in the field of metrology, a calibration step brings the definition of inherent measurement uncertainty. "As closely as possible" therefore means that the calibrations step has to be performed in a high-precision measuring environment, e.g. in laboratory conditions, so as to minimize this uncertainty.

Scanning the reference workpiece at the calibration step can be done by using any measuring device that is adapted to the specific geometry of the nominal path; if the nominal path is a circumference, e.g. the inner profile of a cylinder in an engine cylinder block at a given height, then a dedicated machine could be used to detect the profile, such as a gauge profiler.

More generally, a high precision CMM in metrology laboratory conditions (e.g. controlled temperature, high point-density scanning, etc.) can be used for the calibration step.

The result of the calibration phase is a set of 3D points, i.e. 3D vectors containing the x,y,z coordinates of the points of the real reference workpiece along a path corresponding to the nominal path.

These data, hereinafter referred to as "calibration data", can be stored in a data carrier for future use, possibly after a filtering step whereby a mathematical filter (per se known) is applied and high-frequency oscillations are compensated. Calibration data are conveniently imported into and stored in the CMM computer's memory for elaboration.

Next, at step 21, for each point of the set of measured points $C_0$, ..., $C_i$, ..., $C_n$ obtained during the calibration step, a value of the linear co-ordinate L is computed relatively to the nominal path.

According to the present invention, the reference workpiece is measured by production CMM 1 in production (step 22) at the same speed and conditions that are used in production inspection, which will be referred to in the present description and claims as "production conditions".

During step 22, that is defined as "mastering", another set of measured points $M_0$, ..., $M_i$, ..., $M_m$ or mastering data is obtained, again in terms of 3D vectors.

Next, in step 23 a value of the linear co-ordinate L relatively to the nominal path is computed and stored for each of points Mi.

The method of the invention further includes an inspection step 24 in which a workpiece taken from the production run is positioned in the measure volume in the same position and orientation as the reference workpiece, and measured by production CMM 1 at production conditions.

Again, for each point $I_0$, ..., $I_i$, ..., $I_k$ of the set of measured points a value of the linear co-ordinate L is computed relatively to the nominal path (step 25).

It is to be pointed out that the number of points taken in the calibration, mastering and workpiece inspection steps may be different, as reflected by the use of different indexes n, m, k in the final term of each set.

Given the three sets of points ($C_0$, ..., $C_n$; $M_0$, ..., $M_m$; $I_0$, ..., $I_k$) corresponding to the three measuring phases calibration, mastering and inspection, before final compensation of inspection errors an intermediate point alignment step 26 is performed.

The points of the first two sequences ("calibration" and "mastering") are considered as functions of the linear co-ordinate L, i.e. C=C(L), M=M(L); I=I (L). These functions are described by a finite number of 3D samples, which samples can be interpolated by a continuous function.

Any known interpolation algorithm can be used, as it will be apparent to a skilled person in the field of interpolation. For each point $I_i$ of the third sequence ("inspection") having a corresponding value $L_i$ of the linear coordinate L, two corresponding points having the same value of the linear coordinate (L) in the other two interpolated sequences can be found. Such points can be identified as $C(L_i)$ and $M(L_i)$.

The method of the invention finally includes a compensation step 27 in which the "aligned" points (i.e. points having the same linear coordinate) are used in order to compute compensated points $P_i$ according to the following formula:

$$P_i = I_i - M(L_i) + C(L_i).$$

Quite obviously, the inspection, point alignment and calibration steps are carried out on each of the workpieces to be inspected in a production run. Therefore, after steps 24-27 are reiterated for each of the workpieces of the production run to be inspected as shown in the flow chart of figure 2.

It is essential that the reference workpiece and each of the production workpieces are placed in the measure volume V in the same position and orientation; this is conveniently achieved by using an automatic positioning system both in the mastering step and in each inspection steps.

The advantages of the method of the present invention over the prior art are the following.

First of all, not only "dynamics-induced" errors are compensated, but all other error sources that affect the measurement on the production CMM are taken into account, because compensation is carried out on the grounds of calibration data that are of "absolute" nature, i.e. represent as accurately as possible the real geometry of the reference workpiece; since calibration is performed in metrology laboratory conditions, it is not affected by inherent errors of the production CMM including, but not limited to, residual imperfect orthogonality between the machine axes or the like, but only by an extremely low measurement uncertainty, that can be negligible for all practical purposes. Another example of errors that are compensated by the present method, and not by prior art methods, is errors caused by non-linear thermal expansion in complex workpieces, such as workpieces having parts made of different materials. This is because compensation is made by using calibration data obtained in laboratory conditions in combination with mastering data obtained in production environment, i.e. at production temperature conditions.

The method of the invention provides for compensation of measures obtained by continuous scanning, without any limitation as to the number and density of points achieved, because relies on interpolated continuous curves rather than on point-by-point compensation.

Finally, no time-consuming, preliminary slow reading is required on the same CMM as used in production, since the calibration step is performed on a laboratory measuring device. No downtime of the production CMM is therefore required.

Clearly, changes can be made to the method steps ad described by way of non limiting example, without departing from the scope of the patent as defined by the claims. For example, should the inspection conditions vary (e.g. because of a variation in the temperature in production environment, or because a new position or orientation of the workpiece is required), the mastering step can be repeated (of course on the same reference workpiece used for calibration) at the different inspection condition, and new correction values can be obtained without repeating the calibration step.

It is to be pointed out that, although the described embodiment is related to continuous scanning, the present method can be used also for touch-trigger type measurements or optical measurements. Furthermore, the method is not limited to the use on Cartesian type measuring machines, but can be used on anthropomorphic or parallel-arm machines.

**Claims**

1. A method of inspecting a series of workpieces (13) including:

   - a calibration step whereby calibration data $(C_0, ..., C_i, ... C_n)$ are obtained by measuring a reference workpiece in a high accuracy measuring device in laboratory conditions;
   - a mastering step whereby mastering data $(M_0, ..., M_i, ... M_m)$ are obtained by measuring said reference workpiece on a measuring machine (1) in production conditions,
   - a workpiece inspection step whereby workpiece inspection data $(I_0, ..., I_i, ... I_k)$ are obtained by measuring another workpiece (13) from said series of workpieces on said measuring machine (1) in said production conditions; and
   - a compensation step whereby said workpiece inspection data $(I_0, ..., I_i, ... I_n)$ are corrected by using said calibration data and mastering data.

2. A method as claimed in claim 1, **characterised in that** said workpiece inspection step and said compensation step are repeated for each of the workpieces (13) of said series.

3. A method as claimed in claim 1 or 2, **characterised in that** said calibration, mastering and workpiece inspection data include respective sequences of 3D points $(C_0, ..., C_i, ... C_n; M_0, ..., M_i, ... M_m; I_0, ..., I_i, ... I_k)$.

4. A method as claimed in claim 3, **characterised by** including a first interpolation step after said calibration step whereby a continuous calibration curve is computed by interpolating the points obtained during said calibration step.

5. A method as claimed in claim 4, **characterised by** further including the step of computing, for each of said points $(C_0, ..., C_i, ... C_n)$ obtained during said calibration step, a corresponding value of a linear coordinate (L) along a nominal path corresponding to an ideal profile of the workpiece (13) along which said points are taken.

6. A method as claimed in claim 4 or 5, **characterised by** including a second interpolation step after said mastering step whereby a continuous mastering curve is computed by interpolating the points $(M_0, ..., M_i, ... M_m)$ obtained during said mastering step.

7. A method as claimed in claim 6, **characterised by** further including the step of computing, for each of said points $(M_0, ..., M_i, ... M_n)$ obtained during said mastering step, a corresponding value of the linear coordinate (L) along said nominal path.

8. A method as claimed in claim 7, **characterised in that** said compensation step includes a point alignment step whereby, for each of said points $I_i$ obtained during said workpiece inspection, a first point $C(L_i)$ on said calibration curve and a second point $M(L_i)$ on said mastering curve are defined which have the same value $(L_i)$ of said linear coordinate (L) on said nominal path.

9. A method as claimed in claim 8, **characterised in that** said compensation step includes the step of computing compensated points $(P_i)$ by correcting each of said points $(I_i)$ obtained during said workpiece inspection by the difference between said first point $C(L_i)$ on said calibration curve and said second point $M(L_i)$ on said mastering curve.

10. A method as claimed in any of the preceding claims, **characterised in that** at least said mastering step and workpiece inspection step are performed by continuous scanning.

11. A method as claimed in any of the preceding claims, **characterised in that** at least said mastering step and inspection step are performed on a coordinate measuring machine (1).

Fig. 1

Fig. 2

**European Patent Office**

**EUROPEAN SEARCH REPORT**

Application Number

EP 04 10 2003

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 03/074968 A (RENISHAW PLC ; MCFARLAND GEOFFREY (GB); TAYLOR BENJAMIN ROLLER (GB)) 12 September 2003 (2003-09-12) | 1-3,10, 11 | G01B21/04 |
| Y | * page 4, line 1 - line 21 * <br> * page 6, line 9 - page 7, line 12 * <br> ----- | 4-9 | |
| E | WO 2004/051179 A (RENISHAW PLC ; MCFARLAND GEOFFREY (GB)) 17 June 2004 (2004-06-17) <br> * page 4, line 7 - line 23 * <br> ----- | 1-3,10, 11 | |
| Y | US 5 471 406 A (BREYER KARL-HERMANN ET AL) 28 November 1995 (1995-11-28) <br> * column 5, line 20 - line 63 * <br> ----- | 4-9 | |
| Y | US 6 154 713 A (PETER HEINZ ET AL) 28 November 2000 (2000-11-28) <br> * the whole document * <br> ----- | 4-9 | |

**TECHNICAL FIELDS SEARCHED (Int.Cl.7)**

G01B

The present search report has been drawn up for all claims

| Place of search | Date of completion of the search | Examiner |
|---|---|---|
| The Hague | 8 October 2004 | Arca, G |

EPO FORM 1503 03.82 (P04C01)

**ANNEX TO THE EUROPEAN SEARCH REPORT
ON EUROPEAN PATENT APPLICATION NO.**                                    EP 04 10 2003

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2004

| Patent document cited in search report | | Publication date | Patent family member(s) | | Publication date |
|---|---|---|---|---|---|
| WO 03074968 | A | 12-09-2003 | EP | 1446636 A1 | 18-08-2004 |
| | | | WO | 03074968 A1 | 12-09-2003 |
| WO 2004051179 | A | 17-06-2004 | WO | 2004051179 A1 | 17-06-2004 |
| US 5471406 | A | 28-11-1995 | DE | 4212455 A1 | 21-10-1993 |
| | | | DE | 4245012 B4 | 23-09-2004 |
| | | | DE | 59308908 D1 | 01-10-1998 |
| | | | EP | 0569694 A2 | 18-11-1993 |
| | | | JP | 3314101 B2 | 12-08-2002 |
| | | | JP | 6018254 A | 25-01-1994 |
| US 6154713 | A | 28-11-2000 | DE | 19712029 A1 | 24-09-1998 |
| | | | DE | 59809522 D1 | 16-10-2003 |
| | | | EP | 0866390 A1 | 23-09-1998 |
| | | | JP | 10300455 A | 13-11-1998 |

EPO FORM P0459

For more details about this annex : see Official Journal of the European Patent Office, No. 12/82